# EUROPEAN PATENT SPECIFICATION

(11) **EP 0 944 245 B1**
(45) Date of publication and mention of the grant of the patent: **25.07.2001**
(21) Application number: 98830163.6
(22) Date of filing: 20.03.1998
(51) Int. Cl.: H04N 5/00, H04N 7/36

(54) **Hierarchical recursive motion estimator for video images encoder**
Hierarchischer rekursiver Bewegungsschätzer für Bewegtbildkodierer
Estimation de mouvement hiérarchique et récursive pour codeur d'images vidéo

(43) Date of publication of application: 22.09.1999
(73) Proprietor: STMicroelectronics S.r.l., 20041 Agrate Brianza (Milano) (IT)
(72) Inventor: Piccinelli, Emiliano, 20052 Monza (IT); Pau, Danilo, 20099 Sesto San Giovanni (IT); Zuccaro, Amedeo, 28010 Fosseno di Nebbiuno (IT)
(74) Representative: Pellegri, Alberto

(56) References cited:
- EP-A- 0 447 068
- EP-A- 0 535 746
- EP-A- 0 778 698
- US-A- 5 049 991
- SIU-WAI WU ET AL: "JOINT ESTIMATION OF FORWARD/BACKWARD MOTION VECTORS FOR MPEG INTERPOLATIVE PREDICTION" PROCEEDINGS OF THE PICTURE CODING SYMPOSIUM (PCS), LAUSANNE, MAR. 17 - 19, 1993, no. -, 17 March 1993, pages 14.3/A-14.3/B, XP000346484 SWISS FEDERAL INSTITUTE OF TECHNOLOGY
- HSIEH C H ET AL: "MOTION ESTIMATION ALGORITHM USING INTERBLOCK CORRELATION" ELECTRONICS LETTERS, vol. 26, no. 5, 1 March 1990, page 276/277 XP000105589

## Description

### FIELD OF THE INVENTION

This invention relates to the algorithms and systems of motion estimation in processing video images and more in particular to an algorithm and an architecture of a motion estimator for implementing video coders compliant with the MPEG-2 standard.

### DISCUSSION OF THE STATE OF THE ART ON MOTION ESTIMATION

The concept at the base of motion estimation is the following: a set of pixels of a field of a picture may be placed in a position of the subsequent picture obtained by translating the preceding one. Of course, these transpositions of objects may expose to the video camera parts that were not visible before as well as changes of their shape (e.g. zooming and the like).

The family of algorithms suitable to identify and associate these portions of images is generally referred to as "motion estimation". Such an association permits to calculate the portion of difference image by removing the redundant temporal information making more effective the subsequent process of compression by DCT, quantization and entropic coding.

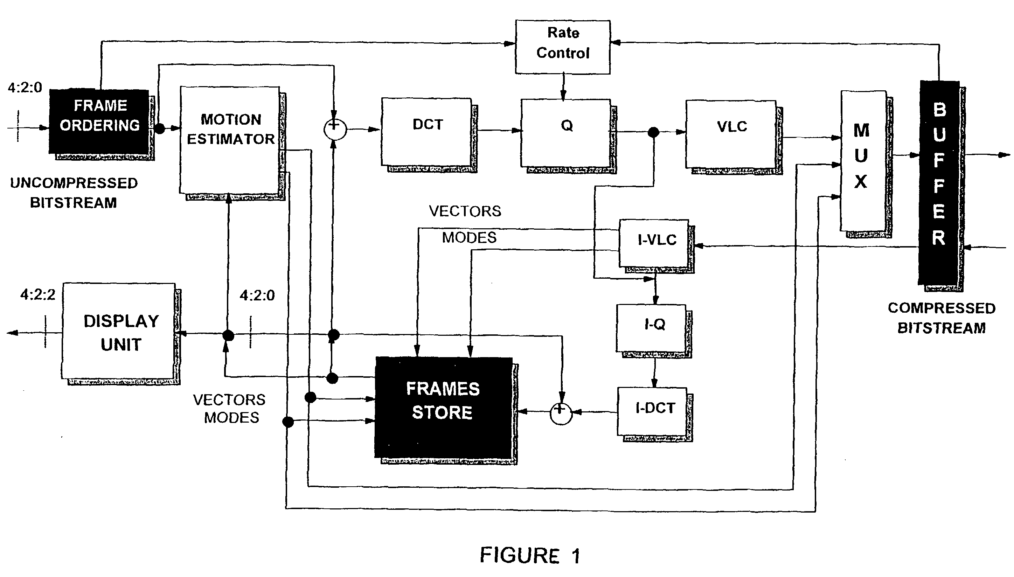

Such a method finds in the standard MPEG-2 a typical example. A typical block diagram of a video MPEG-2 coder is depicted in Fig. 1.

Such a system is made up of the following functional blocks:

### 1) Field ordinator

This blocks is composed of one or several field memories outputting the fields in the coding order required by the MPEG standard. For example, if the input sequence is I B B P B B P etc., the output order will be I P B B P B B ... .
◆ I (Intra coded picture) a field and/or a semifield containing temporal redundance;
◆ P (Predicted-picture) is a field and/or semifield from which the temporal redundance in respect to the preceding I or P (previously co-decoded) has been removed;
◆ B (Biredictionally predicted-picture) is a field and/or a semifield whose temporal redundance in respect to the preceding I and subsequent P (or preceding P and successive P) has been removed (in both cases the I and P pictures must be considered as already co/decoded).

Each frame buffer in the format 4:2:0 occupies the following memory space:

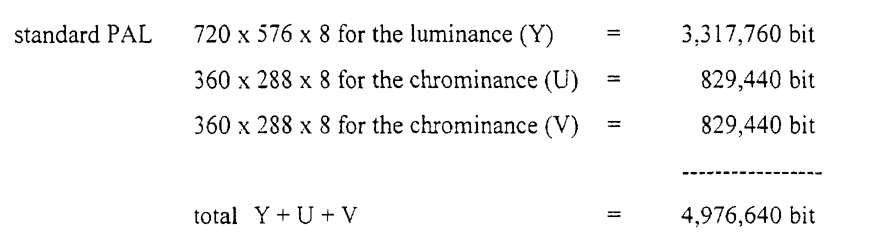

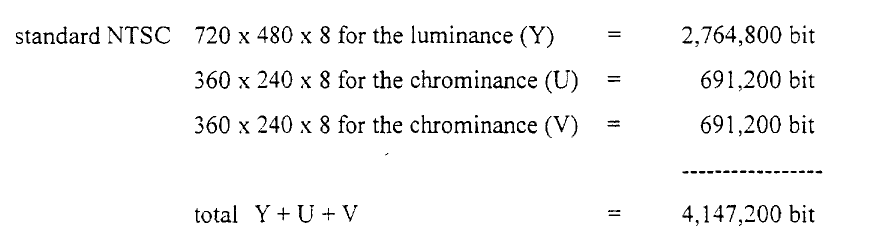

### 2) Motion Estimator

This is the block that removes the temporal redundance from the P and B pictures.

### 3) DCT

This is the block that implements the cosine-discrete transform according to the MPEG-2 standard.

The I picture and the error pictures P and B are divided in 8^{*}8 blocks of pixels Y, U, V on which the DCT transform is performed.

### 4) Quantizer Q

An 8^{*}8 block resulting from the DCT transform is then divided by a quantizing matrix in order to reduce more or less drastically the magnitude of the DCT coefficients. In such a case, the information associated to the highest frequencies, less visible to human sight, tends to be removed. The result is reordered and sent to the successive block.

### 5) Variable Length Coding (VLC)

The codification words output from the quantizer tend to contain null coefficients in a more or less large number, followed by nonnull values. The null values preceding the first nonnull value are counted and the count figure constitutes the first portion of a codification word, the second portion of which represents the nonnull coefficient.

These paired values tend to assume values more probable than others. The most probable ones are coded with relatively short words (composed of 2, 3 or 4 bits) while the least probable are coded with longer words. Statistically, the number of output bits is less than in the case such methods are not implemented.

### 6) Multiplexer and Buffer

Data generated by the variable length coder, the quantizing matrices, the motion vectors and other syntactic elements are assembled for constructing the final syntax contemplated by the MPEG-2 standard. The resulting bitstream is stored in a memory buffer, the limit size of which is defined by the MPEG-2 standard and cannot be overflown. The quantizer block Q attends to the respect of such a limit, by making more or less drastic the division of the DCT 8^{*}8 blocks depending on how far to the filling limit of such a memory buffer the system is and on the energy of the 8^{*}8 source block taken upstream of the motion estimation and DCT transform process.

### 7) Inverse Variable Length Coding (I-VLC)

The variable length coding functions specified above are executed in an inverse order.

### 8) Inverse Quantization (IQ)

The words output by the I-VLC block are reordered in the 8^{*}8 block structure, which is multiplied by the same quantizing matrix that was used for its precedent coding.

### 9) Inverse DCT (I-DCT)

The DCT transform function is inverted and applied to the 8^{*}8 block output by the inverse quantization process. This permits to pass from the domain of spatial frequencies to the pixel domain.

### 10) Motion Compensation and Storage

At the output of the I-DCT block may alternatively be present:
- a decoded I picture (or semipicture) that must be stored in a respective memory buffer for removing the temporal redundance in respect thereto from subsequent P and B pictures;
- a decoded prediction error picture (semipicture) P or B that must be summed to the information removed previously during the motion estimation phase. In case of a P picture, such a resulting sum, stored in dedicated memory buffer is used during the motion estimation process for the successive P pictures and B pictures.

These field memories are generally distinct from the field memories that are used for re-arranging the blocks.

### 11) Display Unit

This unit converts the pictures from the format 4:2:0 to the format 4:2:2 and generates the interlaced format for displaying the images.

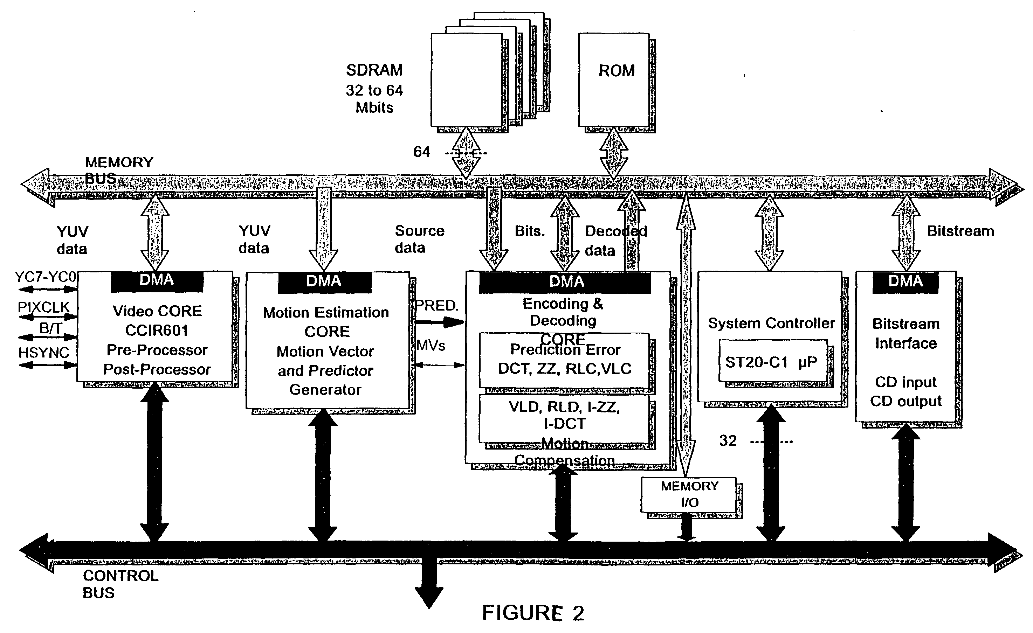

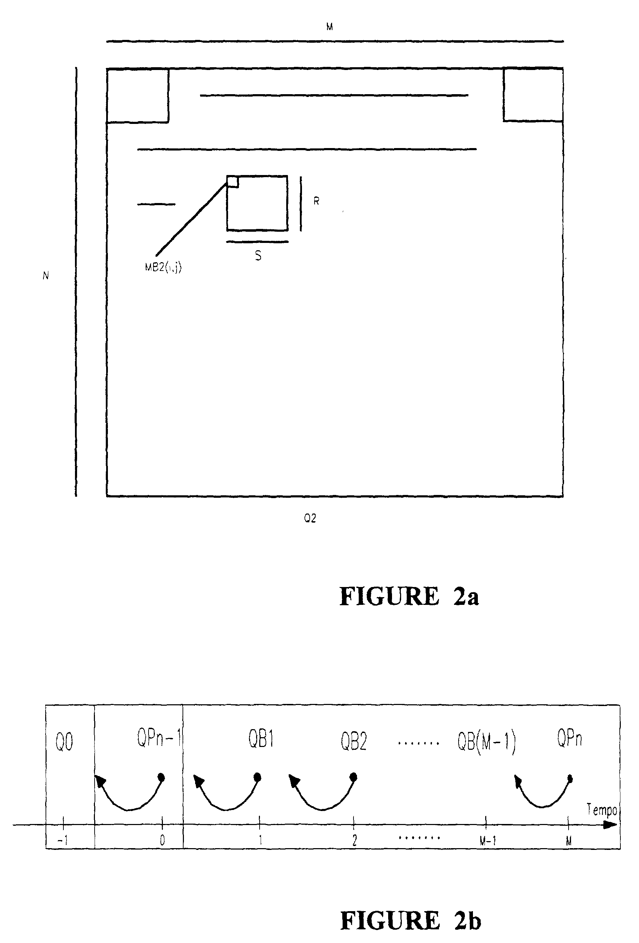

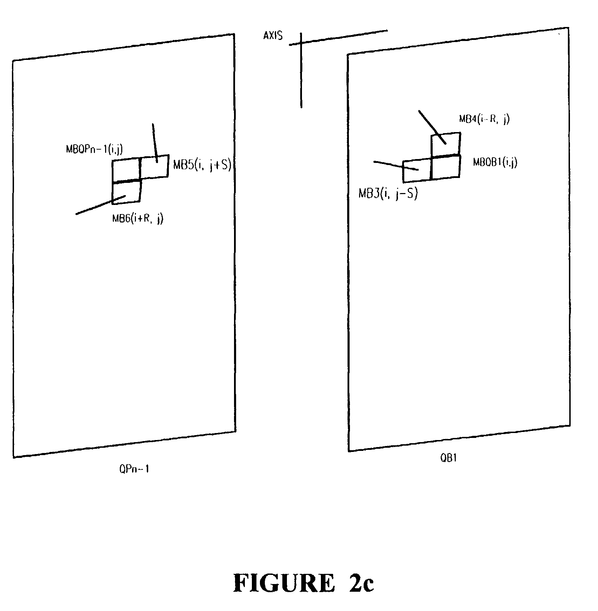

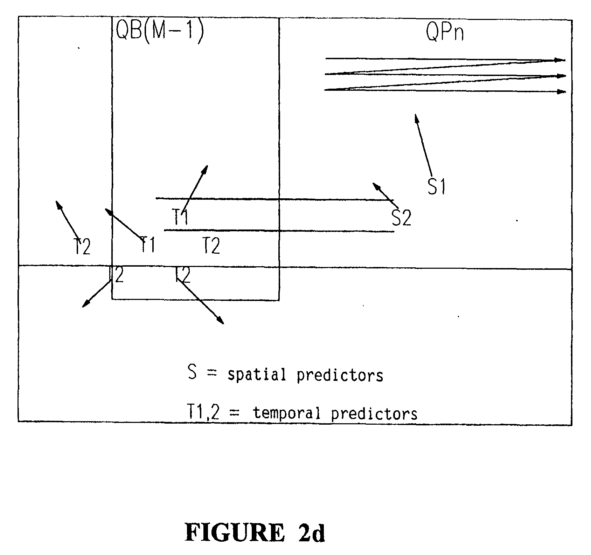

The arrangement of the functional blocks depicted in Fig. 1, in an architecture implementing the above-described coder is shown in Fig. 2. A distinctive feature is in the fact that the field rearrangement block (1), the block (10) for storing the already reconstructed P and I pictures and the block (6) for storing the bitstream produced by the MPEG-2 coding, are integrated in memory devices external to the integrated circuit of the core of the coder, to which the decoder accesses through a single interface, suitably managed by an integrated controller.

Moreover, the preprocessing block converts the received images from the format 4:2:2 to the format 4:2:0 by filtering and subsampling of the chrominance. The post-processing block implements a reverse function during the decoding and displaying phase of the images.

The coding phase employs also the decoding for generating the reference pictures in order to make operative the motion estimation. For example, the first I picture is coded, thence decoded, stored (as described in paragraph 10)) and used for calculating the prediction error that will be used to code the subsequent P and B pictures.

The play-back phase of the data stream previously generated by the coding process uses only the inverse functional blocks (I-VLC, I-Q, I-DCT, etc.), never the direct functional blocks.

From this point of view, it may be said that the coding and the decoding implemented for the subsequent displaying of the images are nonconcurrent processes within the integrated architecture.

EP -A- 0 778 698 shows a fine motion estimation method in hierarchical motion estimation mechanism by carrying out a block matching process on the basis of reconstructed pixel data received from encoder prediction loop, with the motion vector searched in a window with full pel resolution, then the vector is researched in a smaller window at half pel

US -A- 5,049,991 shows movement compensation predictive coding for digital moving picture by using a movement vector obtained by comparing corresp. picture information in divided blocks between frames to produce a coded picture signal.

### DESCRIPTION OF THE EXHAUSTIVE SEARCH MOTION ESTIMATOR

### P field or semifield

Let us consider two fields of a picture (the same applies to the semifields), Q1 at the instant t and the subsequent field Q2 at the instant t+(kp)^{*}T . kp is a constant dependant on the number of B fields existing between the preceding I and the subsequent P (or between two P), T is the field period (1/25 sec. for the PAL standard, 1/30 sec. for the NTSC standard). Q1 and Q2 are constituted by luminance and chrominance components. Let's suppose to apply the motion estimation only to the most energetic and therefore richer of information component, such as the luminance, representable as a matrix of N lines and M columns. Let us divide Q1 and Q2 in portions called macroblocks, each of R lines and S columns.

The results of the divisions N/R and M/S must be two integer numbers, not necessarily equal to each other.

Let Mb2(i,j) be a macroblock defined as the reference macroblock belonging to the field Q2 and whose first pixel, in the top left part thereof is at the intersection between the i-th line and the j-th column.

The pair (i,j) is characterized by the fact that i and j are integer multiples of R and S, respectively.

**Fig. 2b** shows how said reference macroblock is positioned on the Q2 picture, while the horizontal dash line arrows indicate the scanning order used for identifying the various macroblocks on Q2.

Let us suppose to project MB2(i,j) on the Q1 field, obtaining MB1(i,j).

Let us define on Q1 a search window having its center at (i,j) and composed of the macroblocks MBk[e,f] where k is the macroblock index. The k-th macroblock is identified by the coordinates (e,f), such that:$\text{-p ⇐ (e-i) ⇐ +p -q ⇐ (f-j) ⇐ +q}$ the indices e and f being integer numbers.

Each of said macroblock is said to be a predictor of MB2(i,j).

For example, if p=32 and q=48, the number of predictors is (2p + 1) * (2q + 1) = 6,305.

For each predictor, the norm L1 in respect to the reference macroblock is calculated; such a norm is equal to the sum of the absolute values of the differences between homologous pixels belonging to MB2(i,j) and to MBk(e,f). To each sum contribute R^{*}S values, the result of which is called distortion.

Therefore (2p + 1) * (2q + 1) values of distortion are obtained, among which the minimum value is chosen, thus identifying a prevailing position **(e•,f•).**

The motion estimation process is not yet terminated because in the vicinity of the prevailing position, a grid of pixels is created for interpolating those that constitute Q1.

For example if Q1 is composed of:

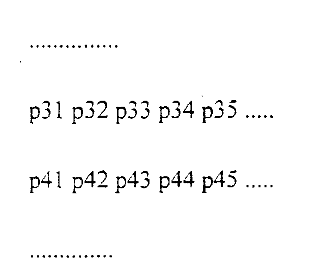

After interpolation, the following is obtained: 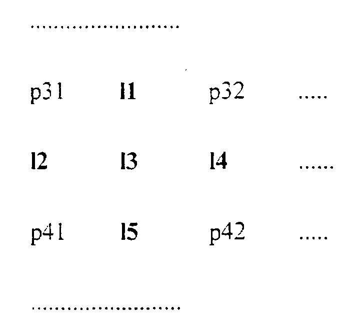 where
l1 = (p31 + p32) / 2
l2 = (p31 + p41) / 2
l3 = (p31 + p32 + p41 + p42) / 4
l4 = (p32 + p42) / 2
l5 = (p41 + p42) /2

Let' us suppose to apply the above noted algorithm in the vicinity of the prevailing position by assuming, for example, p=q=1. In such a case, the number of predictors is equal to 8 and are constituted by pixels that are interpolated starting from the pixels of Q1. Let's identify the predictor with minimum distortion in respect to MB2(i,j).

The predictor more similar to MB2(i,j) is identified by the coordinates of the prevailing predictor through the above noted two steps of the algorithm.

The first step tests only whole positions while the second the sub-pixel positions. The vector constituted by the difference components between the position of the prevailing predictor and of MB2(i,j) is defined as the motion vector and describes how MB2(i,j) derives from a translation of a macroblock similar to it in the preceding field.

It should be noted that other measures may be used to establish whether two macroblocks are similar. For example, the sum of the quadratic values of the differences (norm L2). Moreover, the sub-pixel search window may be wider than what specified in the above example. All this further increases the complexity of the motion estimator.

In the example described above, the number of executed operations per pixel is equal to 6,305+8=6,313, wherein each operation includes a difference between two pixels + an absolute value identification + a storage of the calculated result between the pair of preceding pixels of the same macroblock.

This means that to identify the optimum predictor there is a need for 6.313^{*}S^{*}R parallel operators (at the pixel frequency of 13.5 MHz). By assuming R=S=16 as defined by the MPEG-2 standard, the number of operations required is$\text{6,313*16*16=1,616,128.}$

Each operator may function on a time division basis on pixels that belong to different predictors, therefore if each of these predictors worked at a frequency 4^{*}13.5=54 MHz, the number of operators required would be 1,616,128/4=404,032.

### B field or semifield

Let us consider three picture fields (the same applies also to semifields), QPₙ₋₁ at the instant t, QBk_{B} at the instant t+(k_{B})^{*}T and QPₙ at the instant t+(k_{P})^{*}T with k_{P} and k_{B} dependant on the number of B fields (or semifields) preventively selected. T is the field period (1/25 sec. for the PAL standard, 1/30 sec. for the NTSC standard). QP_{n-1,} QBk_{B} and QPₙ are constituted by luminance and chrominance components. Let us suppose to apply the motion estimation only to the most energetic and therefore richer of information component, such as the luminance, representable as a matrix of N lines and M columns. Let's divide QP_{n-1,} QBk_{B} and QPₙ in portions called macroblocks, each of R lines and S columns.

The results of the divisions N/R and M/S must be two integer numbers, not necessarily equal.

Let us MB2(i,j) be a macroblock defined as the reference macroblock belonging to the field Q2 and whose first pixel, in the top left part thereof is at the intersection between the i-th line and the j-th-column.

The pair (i.j) is characterized by the fact that i and j are integer multiples of R and S, respectively.

Let's suppose to project MB2(i,j) on the fQPₙ₋₁ field obtaining MB1 (i,j) and on the Qpₙ obtaining MB3(i,j).

Let's define on QPₙ₋₁ a search window with its center at (i,j) and composed of the macroblocks MB1k[e,f] and on Qpₙ a similar search window whose dimension may also be different, or in any case predefined, made up by MB3k[e,f] where k is the macroblock index. The k-th macroblock on the QPₙ₋₁ is identified by the coordinates (e,f), such that:$\text{-p1 ⇐ (e-i) ⇐ +p1 -q1 ⇐ (f-j) ⇐ +q1}$ while the k-th macroblock on the QPₙ field is identified by the coordinates (e,f) such that:$\text{-p3 ⇐ (e-i) ⇐ +p3 -q3 ⇐ (f-j) ⇐ +q3}$ the indexes e and f being integer numbers.

Each of said macroblock is said to be a predictor of MB2(i,j).

Thence, there are in this case two types of predictors for MB2(i,j): those obtained on the field that temporally precedes the one containing the block to be estimated (I or P) referred to as "forward", and those obtained on the field that temporally follows the one containing the block to be estimated (I or P) referred to as "backward".

For example, if p1=16, q=32, p2=8, q2=16, the number of predictors is$\text{(2p1+1) * (2q1+1) + (2p2+1)*(2q2+1) = 2,706.}$

For each predictor, the norm L1 in respect to the reference macroblock is calculated; such a norm is equal to the sum of the absolute values of the differences between homologous pixels belonging to MB2(i,j) and to MB1k(e,f) or MB3k(e,f). To each sum contribute R^{*}S values, the result of which is called distortion.

Hence, we obtain the forward distortion values (2p1+1)^{*}(2q1+1), among which the minimum value is chosen, thus identifying a prevailing position **(e**_{**F**}**•,f**_{**F**}**•)** on the field QPₙ₋₁ and (2p2+1)^{*}(2q2+1) backward distortion values among which the minimum value is again selected, thus identifying a new prevailing position **(e**_{**B**}**•,f**_{**B**}**•)** on the QPₙ field.

The motion estimation process is not yet attained because in the vicinity of the prevailing position, a grid of pixels is created to interpolate those that constitute QPₙ₋ ₁ and QPₙ.

For example if QPₙ₋₁ is composed of:

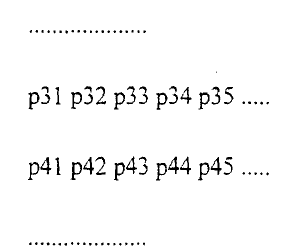

After interpolation, we have: 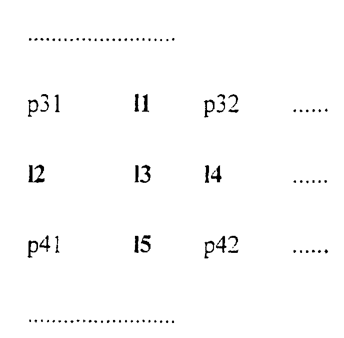 where
l1 = (p31 + p32) / 2
l2 = (p31 + p41) / 2
l3 = (p31 + p32 + p41 + p42) / 4
l4 = (p32 + p42) / 2
l5 = (p41 + p42) / 2

Let us suppose to apply the above noted algorithm in the vicinity of the prevailing position by assuming, for example, p=q=1. In such a case, the number of predictors is equal to 8 and are constituted by pixels that are interpolated starting from the pixels of QPₙ₋₁. Let's identify the predictor with minimum distortion in respect to MB2(i,j).

In the same way we proceed for the Qpₙ field

The predictor more similar to MB2(i,j) on QPₙ₋₁ and on QPₙ is identified by the coordinates of the prevailing predictor through the above stated two steps of the algorithm predicted on each field. The first step tests only whole positions while the second the sub-pixel positions.

At this point we calculate the mean square errors of the two prevailing predictors (forward and backward), that is, the sums of the square of the differences pixel by pixel between the MB2(i,j) with **(e**_{**F**}•,**f**_{**F**}•**)** and with **(e**_{**B**}•,**f**_{**B**}•**)**.

Moreover, the mean square error between MB2(i,j) is calculated with a theoretical macroblock obtained by linear interpolation of the two prevailing predictors and among the three values thus obtained we select the lowest.

Thence, MB2(i,j) may be estimated using only **(e**_{**F**}**•,f**_{**F**}**•)** or just **(e**_{**B**}**•,f**_{**B**}**•)** or both though averaged.

The vector constituted by the components, difference between the position of the prevailing predictor and of MB2(i,j), are defined as the motion vectors and describe how MB2(i,j) derives from a translation of a macroblock similar to it in the preceding and/or successive field.

In the example described above, the number operations carried out for each pixel is equal to 2,706+8^{*}2=2,722, where each operation includes a difference between two pixels plus an absolute value plus an accumulation of the calculated result between the pair of preceding pixels and comprised in the same macroblock.

This means that for identifying the optimum predictor there is a need for 2,722^{*}R^{*}S parallel operators (at the pixel frequency of 13.5 MHz). By assuming R=S=16 as defined by the MPEG-2 standard, the number of operations required is$\text{2,722*16*16=696,832.}$

Each operator may function on a time division basis on pixels belonging to different predictors, therefore if each of them worked at a frequency of 4*13.5=54 MHz, the number of operators required would be 696,832/4=174,208.

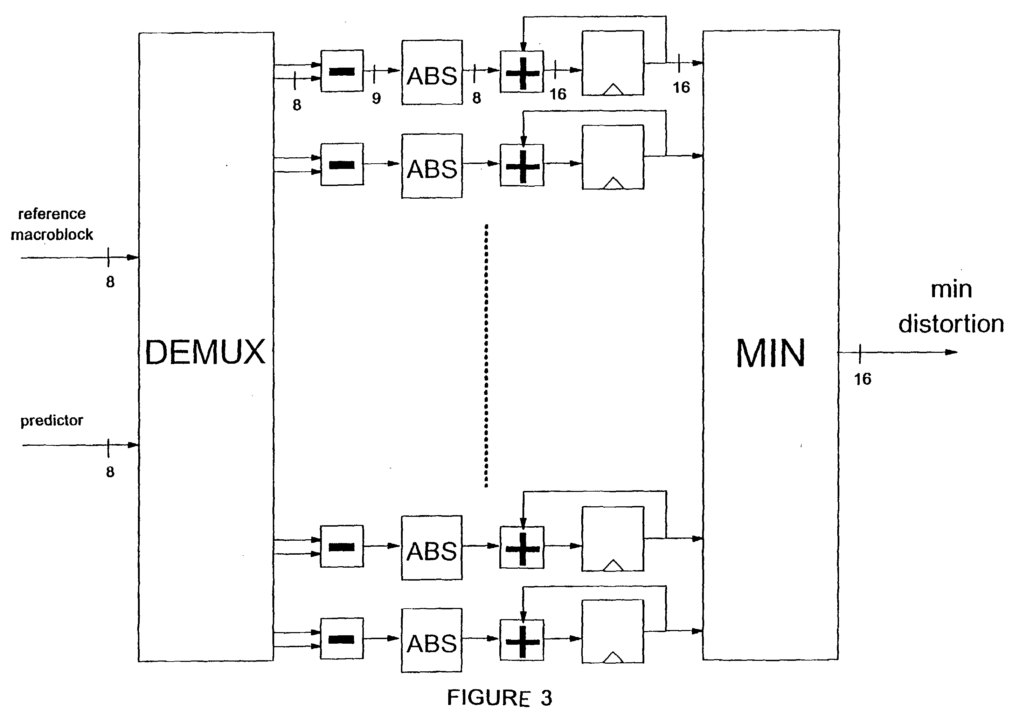

A high level block diagram of a known motion estimator based on an exhaustive search technique is depicted in Fig. 3, wherein the DEMUX block conveys the data coming from the field memory to the operators and where the MIN block operates on the whole of distortion values, calculating the minimum one.

### PURPOSE AND SUMMARY OF THE INVENTION

The object of the present invention is to reduce the complexity of a motion estimator as used for example in an MPEG-2 video coder.

As an illustration of an efficient implementation of the method and architecture of the motion estimator of the present invention, a coder for the MPEG-2 standard will be taken into consideration. By the novel motion estimator of the invention is possible for example to employ only 6,5 operations per pixel in order to find the best predictor of the portion of picture currently being subjected to motion estimation, for an SP@ML compressed video sequence of either PAL or NTSC type. By contrast, the best result that may be obtained with a motion estimator of the prior art, would imply the execution of 569 operations per pixel beside the drawback of requiring a more complex architecture.

The method and relative architecture of motion estimation of the present invention, are defined in the appended claims.

The method of the invention implies a slight loss of quality of the reconstructed video images for the same compression ratio.

Nevertheless, such a degradation of the images is practically undetectable to human sight because the artifaxes are distributed in regions of the images having a substantial motioncontent, the details of which practically pass unnoticed by the viewer.

### DESCRIPTION OF A HIERARCHICAL RECURSIVE MOTION ESTIMATOR OF THE INVENTION

The number of operations per pixels required by the coding process may be remarkably reduced once the use of vectors calculated by the motion estimation process for macroblocks, spatially and temporally in the vicinity of the current macroblock is admitted.

The method herein disclosed is based on the correlation that exists among motion vectors associated to macroblocks in a homologous position in temporally adjacent images. Moreover, also the motion vectors associated to macroblocks belonging to the same picture, spatially adjacent to the current one may represent, with small errors, the motion of the current macroblock.

The process of motion estimation of the invention meets with the following requisites:
◆ The integration of the required number of operators necessary for implementing the method of motion estimation together with auxiliary structures, such as memories for allowing the reuse of precalculated vectors, must be markedly less onerous than that of motion estimators that do not avail themselves of the method of the invention;
◆ The loss of quality of the reconstructed images for a given compression ratio must be practically negligible, compared to motion estimators that do not implement the method of the invention.

In the ensuing description of the novel method of motion estimation, reference is made to a whole of fields equal in number to the distance (imposed beforehand and equal to M) between two subsequent P or I fields, included (a total number of fields equal to M+2 will be then taken into consideration according to the scheme of Figure 2b).

Let the temporal distance between two successive pictures be equal to a period of field. In particular let us suppose to have already considered the first, Qpₙ₋₁, a motion estimation in respect to the preceding (Q0) and thereby consider its association to a motion field per macroblock. Said motion field is generated by using the same method of the first step, as described below.

### FIRST STEP

Let us suppose to search on QPn-1 the prevailing macroblock predictor MBQB(i,j) belonging to the QB1 field, that is the portion of Qpₙ₋₁ that more resembles it, and that such method is applied to all the QB1 macroblocks preceding it following a scanning order from left to right and from the top to the bottom.

According to Fig. 2c, let us consider:
mv_MB5(i,j+S) is the motion vector associated to the macroblock belonging to QPₙ₋₁ and identified by the coordinates (i, j+S)
mv_MB6(i+R, j) is the motion vector associated to the macroblock belonging to QPₙ₋₁ and identified by the coordinates (i+R,j)
mv_MB3(i, j-S) is the motion vector associated to the macroblock belonging to QB1 and identified by the coordinates (i,j-S)
mv_MB4(i-R, j) is the motion vector associated to the macroblock belonging to QB1 and identified by the coordinates (i-R,j).

Let us consider, by way of example, to employ the above vectors for identifying, during a first phase, four predictors starting from the projection of MBQB1 on QPₙ₋₁ and that the prevailing predictor be identified by using the norm L1 (or the norm L2, etc.).

Generally, it is possible to use more than two predictors (belonging to QPₙ₋₁) and also in a different number from those belonging to QB1. The above noted example has proven itself very effective during simulation.

The norm associated to the prevailing predictor is thereafter compared with precalculated thresholds derived from statistical considerations. Such thresholds identify three subsets, each composed of F pairs of vectors, wherein each pair, for example, is composed of vectors having components equal in terms of absolute value but opposite in sign. In the second step, such F pairs are summed to the vector that represents the prevailing predictor, identifying others 2^{*}F predictors among which there may be also sub-pixels positions.

The prevailing predictor in the sense of the norm is the predictor of MBQB1(i,j) on QPₙ₋₁ is the difference between their homologue coordinates individuate the motion vector to it associated.

It must be remarked the fact that in such a method, the norm is calculated starting from the result obtained by subsampling the macroblock according to a quincux scheme, or by interpolating the pixels of QPₙ₋₁ for generating predictor macroblocks disposed in sub-pixels positions.

The quincux grid is obtained by eliminating a pixel every two from the macroblock according
to the following scheme:

| **source macroblock** | **subsampled macroblock** |
|---|---|
| A1 A2 A3 A4 A5 A6 ..... | A1 A3 A5 |
| B1 B2 B3 B4 B5 B6 ..... | B2 B4 B6 |
| C1 C2 C3 C4 C5 C6 ..... | C1 C3 C5 |

In this way, the operations necessary for calculating the norm are reduced by 50% compared to the case of an exhaustive search technique of a known motion estimator.

The method used for interpolating the pixels of QPₙ₋₁, thus generating the sub-pixels thereof, is for example the one used in the exhaustive search estimator of the prior art.

Let's repeat what described above for QB1 also for the successive fields QB2...QB(M-1) and Qpₙ, calculating the predictors of each on the respective fields immediately preceding temporally, obtaining so a motion estimator for each field of the partial sequence considered.

Said motion estimators must be stored in suitable structure to enable the second step.

### SECOND STEP

In first place the QPₙ field (type P) is coded and this requires to find a spreading of its macroblocks in respect to the Qpₙ₋₁ field positioned at a temporal distance equal to M field periods.

To perform this estimation let us consider the MBPₙ (i,j) block belonging to QPₙ where i and j represent the position of the first top left pixel of the above mentioned macroblock in respect to the top left comer of the field it belongs to, and let us suppose that all the preceding QPₙ macrblocks have already been submitted to such a process according to the scanning order.

By referring to Figure 2d, let us consider the two blocks of coordinates (i,j-S) immediately to the left ad above (coordinates (i-R,j)) the block to be estimated MBPₙ(i,j) both belonging to QPₙ and that have already been submitted to motion estimation to which they are therefore associated two motion vectors which will identify, on QPₙ₋₁, two spatial predictors macroblocks.

Moreover, let us consider the field immediately preceding (in the temporal sense) the current one: QB(M-1) has been already submitted to motion estimation in respect to its own previous field, QB(M-2), and thus, to each of its macroblock a translation vector is associated. A portion of such vectors may be considered to identify, properly scaled in terms of the temporal distance existing between QPₙ₋₁ and QPₙ, the new MBPₙ (i,j) referred to as temporal predictors. These predictors are positioned on QPₙ₋₁.

In particular, the positions identified by the motion vectors associated to the macroblocks, indicated in the figure with T_{1,2} are tested If the temporal distance to estimate is of one field period. In this case only the vectors associated with T1 (of coordinates (i,j+S) and (i+R,j) will be used, otherwise those indicated by T2 should be also considered and whose coordinates are (i+R,j+2^{*}S), (i+2^{*}R,j+S), (i+2^{*}R,j-S), (i+R,j-2^{*}S).

Of course the number of these temporal predictors may also be different from the number indicated, however this choice is made based on the best experimental results.

Among all the indicated predictors only one is chosen using the criterion of the norm L1. This norm is then compared with precalculated thresholds derived from statistical considerations. These thresholds identify 3 sub-sets of pair of vectors, whose components are equal in absolute value but with opposite signs. The number of such pairs is taken equal to F and F is the function of the temporal distance to cover by the estimation (F=F(T_dist)). In the second phase, such pairs are added to the vector that identifies the prevailing predictor, identifying other 2^{*}F predictors among which there may be also subpixel positions.

The prevailing in the sense of the norm is the predictor of MBPₙ(i,j) on QPₙ₋₁ and the difference between their homologous coordinates identifies the motion vector to it associated.

For example, the number of operations per pixel according to the above described method for the P fields is equal to:
- first step 12
- second step 24
- coordinate position (i-0,j-0) 1
- partial total 37 (without quincux subsampling)
- final total 18.5 (with quincux subsampling)

This is followed by the estimation of the B fields: the procedure considers that the estimate is to be carried out both for the P or I field that temporally preceding the one to be estimated, in respect to both the I or P field that follows.

As for the estimation of the preceding I or p field the process is similar to what described above, whereas for the estimation towards the successive field (P or I) there are some differences in using the temporal predictors. In this case, this term is used to identify the motion vectors associated to the macroblocks positioned in the same positions above described as for the temporal predictors of the P fields, though belonging to the immediately successive field (in the temporal sense) to the one to be estimated (thus always moving in the estimate direction).

For example, let us suppose we want to estimate QB(M-2) in respect to QPₙ. Hence, we utilize the vectors associated to the QB(M-1) field. The latter are calculated during the implementation of the first algorithmic step.

It is necessary that such vectors are symmetrically overturned in respect to the origin because they identify the position of a bock belonging to a future field as compared to a previous field. It is also necessary to scale them in a proper manner in function of the temporal distance between the current field and the one which to be estimated.

At this point, once the best backward predictor is chosen in the sense of the norm L1 between the two spatial and temporal ones (for example 2 or 6), we choose again a certain number of pairs of small vectors symmetrical in respect to the origin (such a number is also a function of the temporal distance to cover) choosing them within the predefined whole by comparing the norm found with some thresholds defined by statistical considerations. Such pairs of vectors, added to the prevailing found above, will identify new predictors among which there may be also sub_pixel positions.

The prevailing in the sense of the norm is the final backward predictor for the block subject to estimation.

Finally, for each macroblock two predictors are so far identified, one on the I or P field that temporally precedes QB(M-2) and one on the successive I or P field. A third predictor is also identified and obtained by linear interpolation of the pixels belonging to the above cited predictors.

Out of the three predictors one is chosen based on the norm L1. The latter will be the final predictor which is subtracted from the reference block (the one submitted to estimation) obtaining in this way the prediction error.

For example, the number of operations per pixel according to the above described method is equal to:
- first step 12
- second step 33
- coordinate position (i-0,j-0) 1
- partial total 46 (without quincux subsampling)
- final total 23 (with quincux subsampling)

In these conditions, the performance in terms of signal/noise ratio that is obtained is equivalent to that of the known exhaustive search estimator (see Figure 3), while the complexity of the hardware implementation is markedly reduced.

### BRIEF DESCRIPTION OF THE DRAWINGS

The different aspects and advantages of the invention will become even more evident through the following description of an embodiment and by referring to the attached drawings, wherein:
**Figure 1** is a basic diagram of a video coder MPEG-2 MP@ML including the block called "motion estimator" which is the object of the present invention;
**Figure 2** shows the architecture of the coder MPEG-2 MP@ML of Fig. 1;
**Figure 2a** is a reference scheme of the relative position of the macroblock taken into consideration in the description of the known method of motion estimation;
**Figure 2b** shows the temporal scheme of a whole of fields equal in number to a certain distance between subsequent P or I fields;
**Figure 2c** is a reference scheme of the relative position of the macroblock of pixels taken into consideration in the example of calculation according to the invention;
**Figure 2d** shows the relative position of the spatial and temporal macroblock predictors;
**Figure 3** is a block diagram of the calculator of the norm between predictors and reference macroblocks, wherein is highlighted the array of parallel operator blocks that conduct the calculation of the norm L1;
**Figure 4** shows the architecture of the hierarchical recursive motion according to the present invention;
**Figure 5** shows the architecture of the estimator of Figure 4, relative to the first coding phase;
**Figure 6** is a scheme of the quincux subsampler and interpolator;
**Figure 7** shows the diagram of the block "comparator of M.A.E." for addressing the ROM contained in the diagram of Fig. 8;
**Figure 8** is the diagram of the block "random addressing of macroblocks".
**Figure 9** shows the memory architecture for the motion fields.
**Figure 10** is the architectural scheme of the estimator of Figure 4, relative to the second coding phase;
**Figure 11** shows the architecture of the estimator of Figure 4, relative to the implementation of the conclusive coding phase.
**Figure 12** shows the block "random addressing of the macroblocks" of Figure 11.

### ARCHITECTURE OF THE HIERARCHICAL RECURSIVE MOTION ESTIMATOR OF THE INVENTION

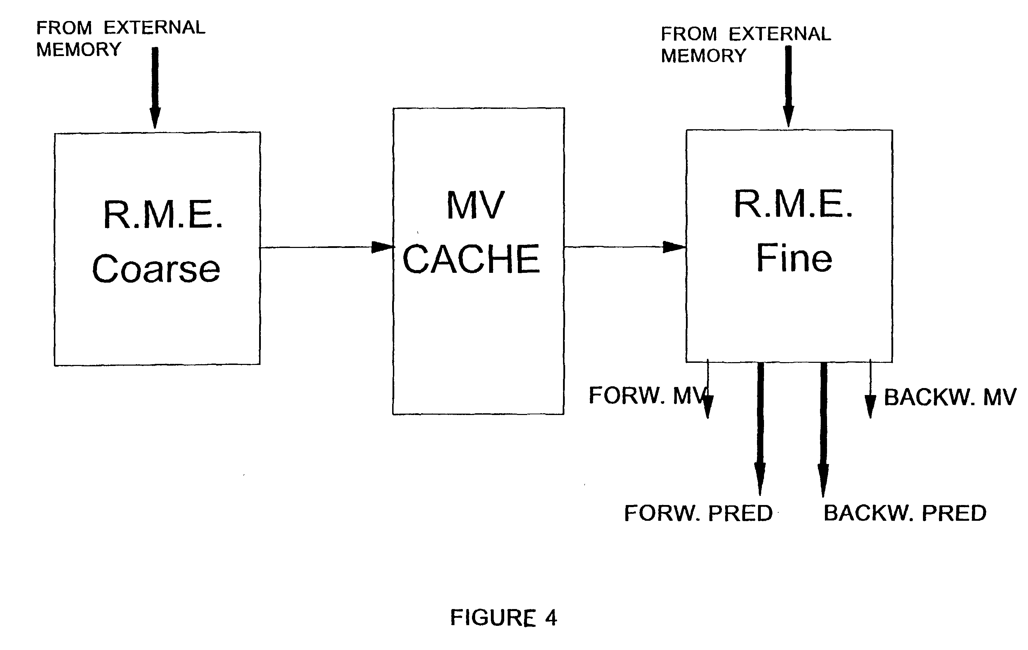

A block diagram of the hierarchical recursive motion estimator of the invention is depicted in Fig. 4.

In particular there are three blocks: the first carries out the first step of the procedure, that is the initialization and convergence of the motion fields ; the third block carries out the second step of the algorithm, that is to say the coding itself of the MPEG-2 fields.

The above cited blocks interact through a memory that contains the two motion fields of the fields comprised between the first I or P field and a successive one of the same type.

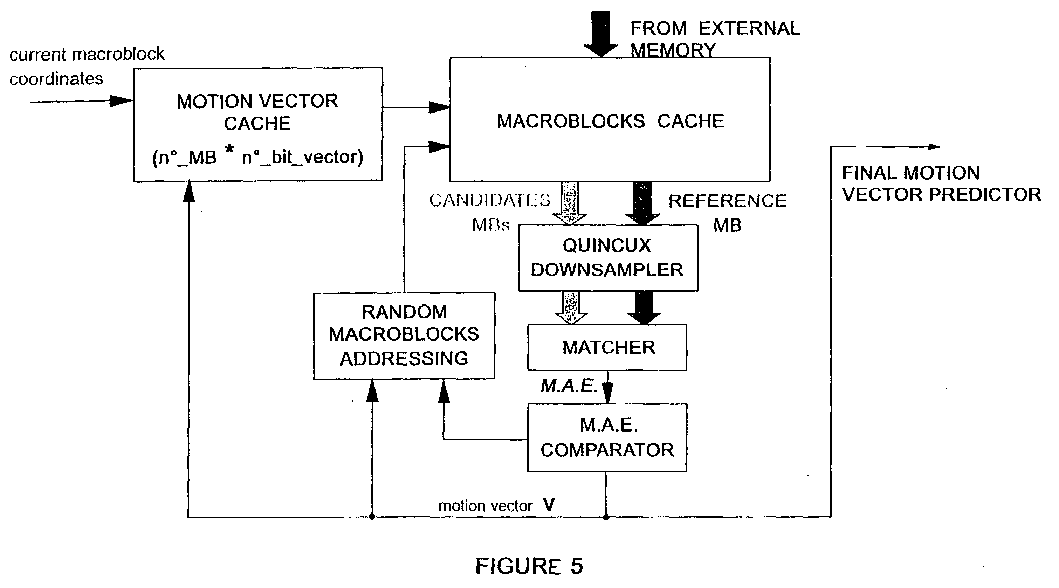

The block referred to as **R.M.E. Coarse** is shown in Figure 5. This identifies a memory of (N^{*}M)/(R^{*}S) cells (each of T bits) containing the motion vectors associated to the macroblocks preceding the current one and disposed on the same field and on the preceding one. Moreover, there is also a memory for storing the predictors belonging to the current field. This memory has dimensions G^{*}H^{*}R^{*}S^{*}8 and permits to limit the number of accesses to the external memory, which would otherwise need to be accessed every time a predictor is required for feed the motion estimator, thus incrementing sensibly the passband.

By referring again to the same example described above, let us consider step 1 during which the four motion vectors are:
- mv_MB5(i,j+S)
- mv_MB6(i+R,j)
- mv_MB3(i,j-S)
- mv_MB4(i-R,j)

Depending on the position (i,j) of the macroblock which is being subjected to motion estimation and the reference macroblock, the motion vectors are acquired by the block **memory of the motion vectors** and are used for addressing the **macroblock memory,** from which said four macroblocks feed, one at a time, the **quincux subsampling block.** These subsampled macroblocks, eventually interpolated for defining the sub-pixel position, thereafter feed the block that calculated the norm L1 (or L2, etc.) between said predictor and the reference predictor. Said norm, by identifying the prevailing predictor of step 1 of the processing, permits to the **M.A.E. comparator** to address a ROM wherein vectors to be summed to the one associated to the prevailing predictor are stored.

The ROM is contained in the block called **random addressing of macroblocks**, at the output of which are obtained the addresses that are used for singling out the predictors in the **macroblocks memory**. These predictors feed the same blocks described in relation to the step 1. At the end of step 2, the motion vector **V** is obtained, and is stored in a register and made available to the coding process.

It may be noticed how the number of parallel operators is definitely very reduced, thus the implementation of the structure shown in Figure 3 is markedly less cumbersome simpler because the required number of operators is halved.

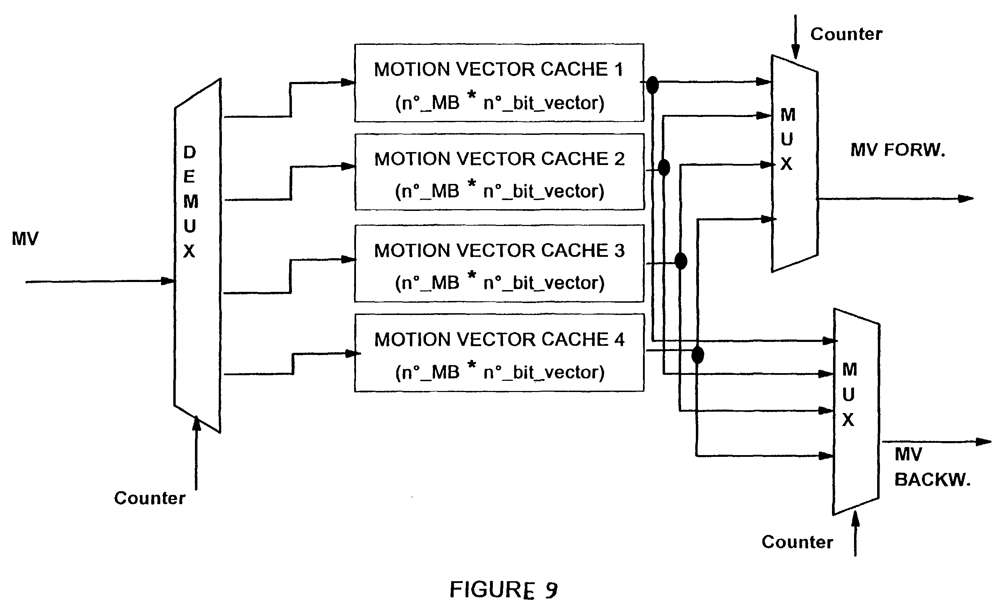

The structure of the block in Figure 4 called **MV cache** is shown in Figure 9: the motion vector outcoming the first block is conveyed to one of the six memories destinated to contain the motion fields, each of which has a number of cells equal to (N^{*}M)/(R^{*}S)of T bits each.

Such memories provide the motion fields used in the subsequent final estimation and in particular we have two output lines, one supplies the forward predictors and one supplies the temporally backward predictors.

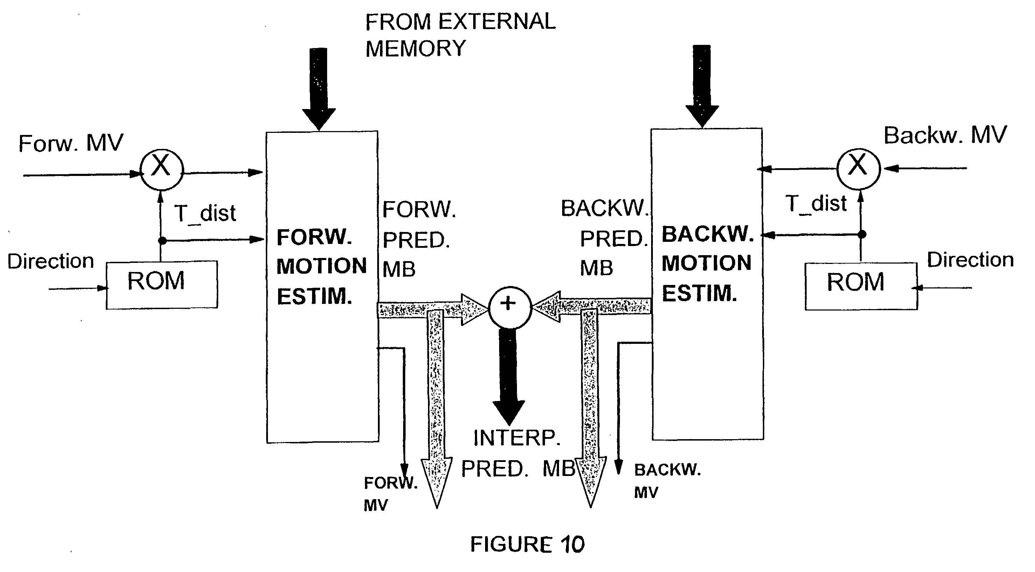

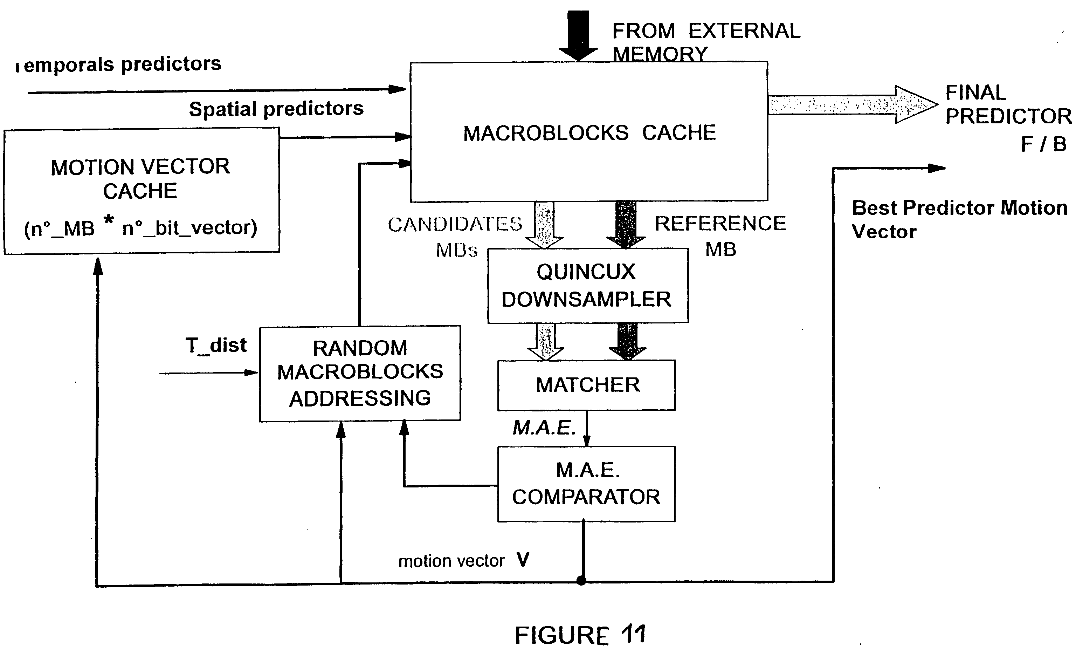

The structure of the last block of Figure 4, called **R.M.E. fine,** is shown in Figure 10. It is possible to see how the motion vectors may be appropriately scaled in function of the estimate direction (forward or backward) and of the temporal distance and are then made available to the two forward and backward estimation blocks operating in parallel and whose structures are represented in Figure 11.

It can be noticed how the structure of the above cited estimation blocks is substantially similar to the one that operates the completion of the first estimation step described in Figure 5 with the exception of the absence of the memory dedicated to contain the motion field, being this contained in the **MV cache.**

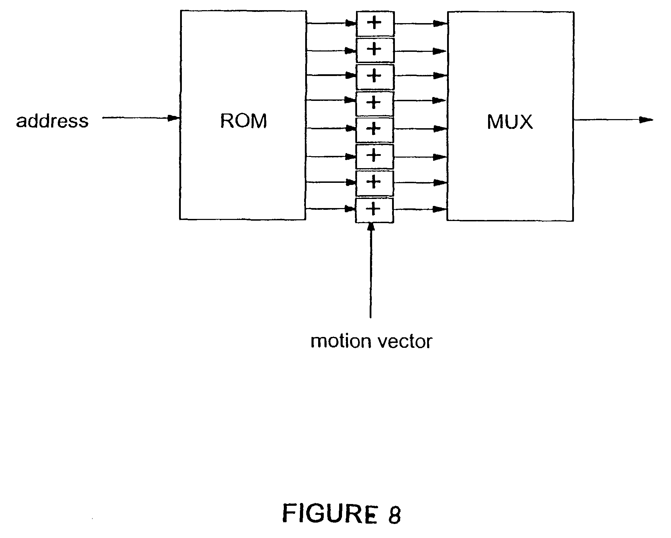

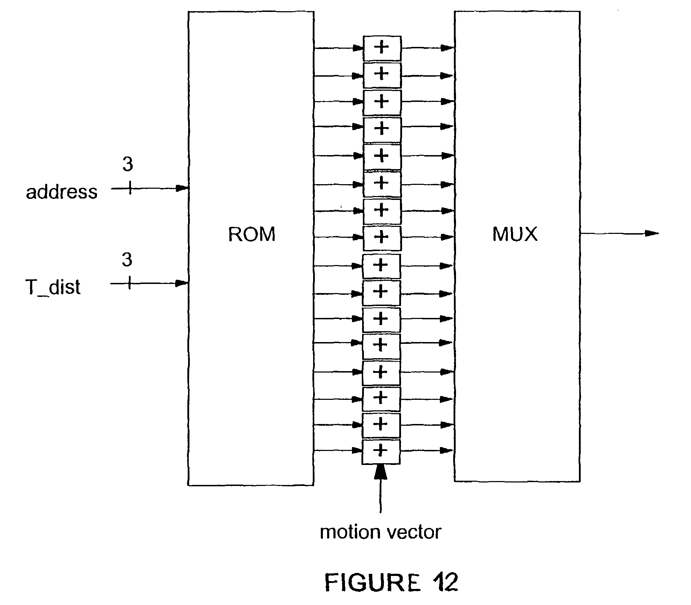

Furthermore, the structure of the **block random addressing** is new, and its structure is shown in Figure 12. In the figure we notice that the adders exist in greater number as compared to the similar block existing in the structure of the first estimating step of Figure 8.

The adders serve to apply some small variations to the prevailing vector formed by testing of the spatial and temporal predictors. However, only a certain number of such adders is used. The selection is carried out based on the temporal distance to cover by the estimation (the greater is the distance, the greater is the number of adders used).

The selection of the type of variation (more or less important) is made by reading a ROM addressed by the MAE obtained from the **MAE comparator.** This ROM contains all the possible variations to be applied and is obtained through statistical considerations.

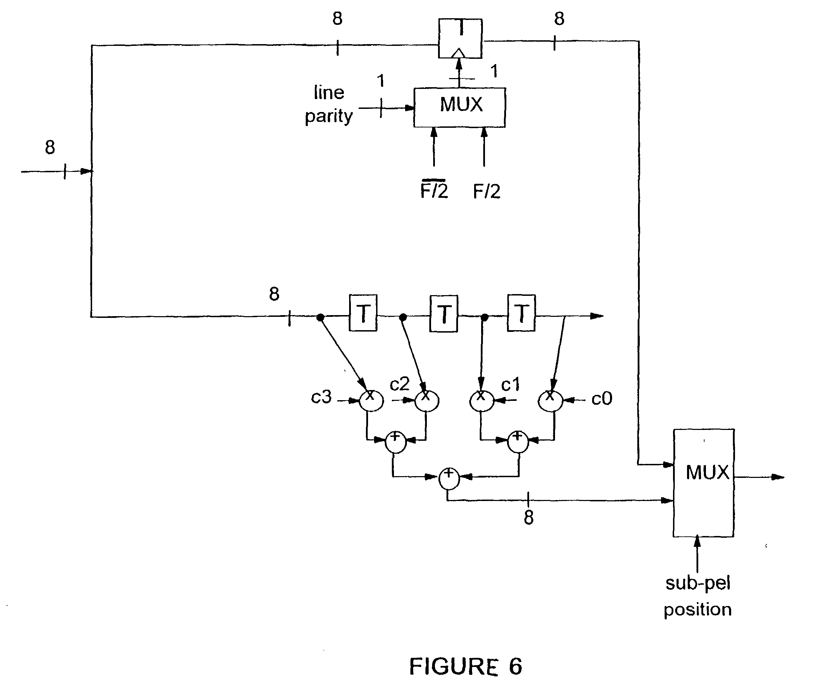

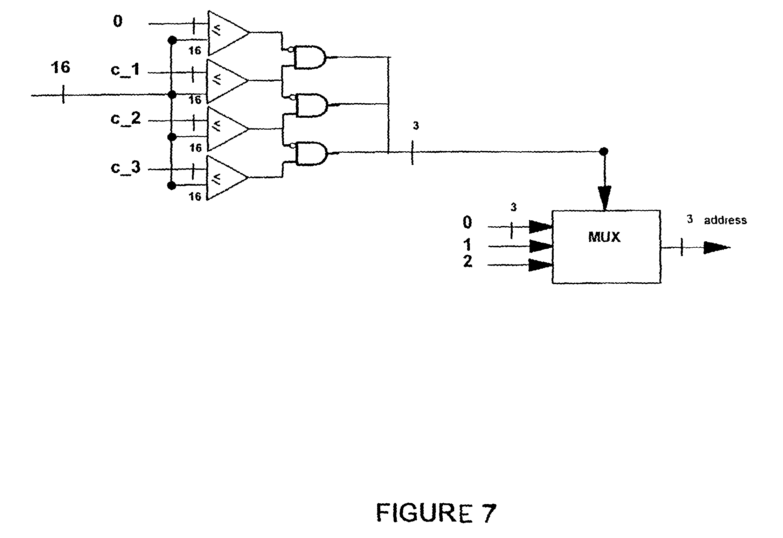

Figures 6 and 7 show the embodiments, respectively of the **quincux subsampler** and of the **MAE comparator** of the scheme of Figure 11, while the respective **calculator of the norm L1** has a functional scheme substantially identical to the one already shown in Figure 3.

With reference to the scheme of Figure 6, the **quincux subsampler** is formed by a plurality of 8-bit registers commanded, by way of a multiplexer (mux), by two signals of same frequency but opposite phase. The interpolator is constituted by a plurality of T registers, which permits the access to the sampled pixels at different instants, making them available for the downstream blocks of multiplication and addition. The coefficients C0, C1, C2, C3, C4 may for example take the following values, if applied to the source pixels p31, p32, p41, p42:

| **p31** | **p32** | **p41** | **p42** | |
|---|---|---|---|---|
| 1/2 | 1/2 | 0 | 0 | ------- **I1** |
| 1/2 | 0 | 1/2 | 0 | ------- **I2** |
| 0 | 0 | 1/2 | 1/2 | ------- **I5** |
| 0 | 1/2 | 0 | 1/2 | ------- **I4** |
| 1/4 | 1/4 | 1/4 | 1/4 | ------- **I3** |
| 0 | 0 | 0 | 0 | ------- quincux subsampling implementation |

The multiplexer finally selects the output, depending on the type of predictor required.

With reference to diagram of Figure 3, the circuit of calculation of the norm L1 among predictors and the reference macroblock is composed of a demultiplexer that conveys the predictors and the reference macroblock toward the appropriate operator. For example, if the macroblock has a 16^{*}16 size, and by defining the norm L1 as the sum of the absolute values of the differences between homologous pixels (predictor/reference), the precision at the output of the subtractor block may be defined in 9 bits, in 8 bits the precision of the absolute value block and in 16 bits the precision of the accumulation block. The latter is constituted by an adder and a 16-bit register.

The outputs of the operators feed a block that calculates the minimum value, outputting the minimum value which is also called **MAE** (Mean Absolute Error).

With reference to the scheme of Figure 7 which shows the architecture of the **MAE comparator** for addressing the ROM of the scheme shown in Figure 9, the MAE must be comprised in one of the three subsets defined by the values:
- 0 ö c_1
- c_1 ö c_2
- c_2 ö c_3
as a consequence at the output an address is produced.

By referring to Figure 8 showing the architecture of the "macroblocks random addressing", the address produced by the block of Figure 7 addresses a ROM which outputs 8 addresses, called "motion vectors", to be summed to the motion vector defined during step 1, as described above.

These sums are multiplexed for addressing the **macroblocks memory**.

By referring to Figure 9 that shows the memory architecture of the motion fields, a "demultiplexer" controlled by a counter, addresses the memory position where to store the single motion vector prevailing from the first step of the algorithm, writing thus the content of the single cache; as output, two multiplexers, both controlled by appropriate counters, selecting the vectors needed for the following estimation to be implemented in the second algorithmic step: which are therefore required simultaneously, at the most two motion vectors: one for the "forward" estimation and one for the "backward" estimation.

By referring to Figure 10 showing the implementing architecture of the second coding step, the estimation direction, being it the forward or backward estimation and the temporal distance to cover modify respectively the sign and module, according to appropriate coefficients contained in the ROM, the temporal motion vectors read from the **MV cache**: said vectors will be then used by the downstream structure which performs the final estimate phase which returns, as output, the prevailing vector and the motion vector associated to it.

Finally, it should be noticed that the two predictors (forward and backward) are added so to generate the "interpolated" predictor.

Figure 11 shows the architecture of the final phase block of the motion estimation which is similar to that of the analogous block of Figure 5 relative to the implementation of the first algorithmic step with the exception of the macroblocks random addressing block , which has a further input: T_dist. This is required for the selection of the total number of variations to be applied to the prevailing vector, following to the spatial/temporal predictors test.

Figure 12 shows the macroblock **random addressing macroblock** wherein to the prevailing motion vector are added the variations selected on statistical factors, direction of the estimate and temporal distance to cover.

The embodiments and applications of the motion estimator of the invention are numerous, among these the following can be mentioned:
- The motion estimation may be implemented by extracting predictors from a temporally preceding picture and also from a temporally successive picture. If both estimations are implemented in parallel, replicas of the structure of Figure 4, operating in parallel, may be employed. The use of replicas of the motion vector memory and of the macroblocks memory is also contemplated.
- Coders for recording on digital video disks also called DVD RAM.
- Camcorders.
- Digital coders, even if not based on the MPEG-2 standard, where a step of motion estimation is required.

## Claims

1. A method of motion estimation from homologous fields or pictures of successive images for video coders, comprising dividing each picture of N lines and M columns to be subjected to motion estimation in a plurality (N/R)^{*}(M/S)of reference macroblocks, each of R lines and S columns of pixels, defining for each of said reference macroblocks a set of P+Q+2^{*}D predictor macroblocks of at least one of luminance and chrominance components disposed on the preceding picture, and wherein:
a) P predictors are identified using motion vectors associated to macroblocks that precede the reference macroblocks on the same picture according to a raster scanning, by projecting said vectors on the macroblock homologous to the reference macroblock and disposed on the preceding picture,
b) Q predictors are identified by the use of motion vectors associated to macroblocks following the reference macroblock on the preceding picture according to a raster scanning, by projecting said vectors on the macroblock homologous to the reference macroblock placed on the preceding picture,
c) 2^{*}D predictors are singled by the use of the motion vectors associated to P and Q predictor macroblocks summed to integer and/or fractionary quantities predefined in look-up tables addressed by an integer number associated to the field between a number C of available fields of the norm L with minimum P and Q values and the reference macroblock,
d) a subsampling block is sequentially fed with the predictor values of said P+Q+2^{*}D macroblocks and with the pixel values of the reference macroblock,
e) for each pair of macroblocks constituted by one and only one among the predictors P or Q or 2^{*}D and the reference macroblock, the norm referred to as L1 is calculated and represents the sum of the differences in absolute value between the homologous pixels belonging to said pair of macroblocks,
f) the minimum value of said norms is identified and the x and y components are calculated for the motion vector associated to the reference macroblock as the difference between the homologous coordinates of the first pixel, according to a raster scanning of the reference macroblock, and the predictor with minimum distortion which minimizes the value of said norm L1,
wherein the total number of operations is reduced by employing a recursive procedure based on the correlation existing among motion vectors associated to macroblocks adjacent to the reference macroblock during a picture processing, storing the motion vectors associated to all the macroblocks of picture, overwriting them one by one with the motion vectors associated to corresponding macroblocks of a successive picture during the processing thereof and as said motion vectors are calculated in succession following a raster type of scanning of the macroblocks and using the stored motion vectors already calculated, associated to said P predictors macroblocks and the stored motion vectors associated to said Q macroblocks, nonhomologous to said P macroblocks adjacent to the reference macroblock during the processing of the current picture for addressing P+Q predictor values, characterized in that it also comprises the following operations:
generating two motion vectors (V) for each macroblock of the field being processed, storable in two distinct output registers, through two parallel recursive search estimators, each estimator being fed through multipliers with motion vectors read from a B number of memories containing (N/R)^{*}(M/S) motion vectors;
said motion vectors supplied to said two estimators being multiplied by precalculated constants (T_dist) contained in a read only memory whose value depends on which of said B memories the motion vectors are read, from the I, P or B field being estimated, and on whether the estimation is carried out in relation to a preceding or successive field to the one currently under
estimation;
said B memories being periodically overwritten with the motion vector values calculated in succession for the macroblocks relative to the future fields to the field being estimated, correspondingly to the enabling period of the B memories and according to the coding process specified in a), b), c), d), e) and f).

2. The method of claim 1, further comprising the following steps:
identifying the predictor macroblock with minimum distortion among all the above noted P+Q predictor value;
comparing the so-called L1 norm value associated to said minimum distortion predictor with a plurality of T precalculated thresholds, derived from statistical considerations, identifying a plurality D of pairs of vectors, each pair constituted by vectors having components of identical absolute value but of opposite sign;
summing said pairs of vectors to the vector associated to the said minimum distortion predictor, identifying a number 2^{*}D of predictors, double in respect to the number of said pairs of vectors, by including intermediate or sub-pixel positions;
calculating said L1 norm value for each pair of macroblocks constituted by one predictor macroblock belonging to said 2^{*}D set and said reference macroblock;
identifying the minimum distortion macroblock among all the 2^{*}D macroblocks;
calculating the motion vector.

3. The method of any one of the preceding claims, characterized in that said L1 norm value is calculated from the result obtained by subsampling the macroblock according to a quincux grid.

4. The method according to any of the claims 1 and 2, wherein the L1 norm value is calculated by interpolating the pixels of the predictor by generating a new predictor in a sub-pixel position in respect to the plurality of positions associated to the preceding picture.

5. A recursive motion estimator for generating two distinct motion vector (V) storable in respective output registers, comprising:
a first recursive estimation block (R.M.E. coarse) generating a motion vector for each macroblock belonging to the field currently estimated and storing the vectors in a B number of memories belonging to a memory vector cache (MV CACHE) and activated in succession at every B field period;
said memory vector cache (MV CACHE) feeding a second recursive estimation block (R.M.E. fine) with at least two motion vectors contained in one of said B memories currently activated, said second recursive estimation block (R.M.E. fine) comprising:
a multiplier circuit of the two vectors fed to said recursive estimation block (R.M.E.), respectively by two coefficients (T_dist1, T_dist2) read from a read only memory whose value depends on the type of field being estimated, on the field that contains the predictor, on the respective temporal distance and on the fact of whether the predictor field follows (T_dist1) or precedes (T-dist2) the one being estimated;
a pair of recursive search estimators, the first operating on future predictor fields and the second on past predictor fields, input with the respective vectors resulting from said multiplication and with the respective coefficients (T_dist1, T_dist2).

## Patentansprüche

1. Verfahren zur Bewegungsschätzung aus homologen Teilbildern oder Bildern von aufeinanderfolgenden Bildern für Videocodierer, umfassend das Unterteilen jedes Bildes aus N Zeilen und M Spalten, die der Bewegungsschätzung unterworfen werden sollen, in mehrere (N/R) × (M/S) Referenz-Makroblöcke, wovon jeder R Zeilen und S Spalten aus Pixeln besitzt, und Definieren einer Menge aus P + Q + 2 × D-Prädiktor-Makroblöcken aus Luminanzkomponenten und/oder Chrominanzkomponenten, die in dem vorhergehenden Bild angeordnet sind, für jeden der Referenz-Makroblöcke, und bei dem:
a) P Prädiktoren entsprechend einer Rasterabtastung unter Verwendung von Bewegungsvektoren, die Makroblöcken zugewiesen sind, die den Referenz-Makroblöcken im selben Bild vorhergehen, identifiziert werden, indem die Vektoren auf den Makroblock, der zu dem Referenz-Makroblock homolog ist und sich in dem vorhergehenden Bild befindet, projiziert werden,
b) Q Prädiktoren entsprechend einer Rasterabtastung unter Verwendung von Bewegungsvektoren, die Makroblöcken zugewiesen sind, die dem Referenz-Makroblock in dem vorhergehenden Bild folgen, identifiziert werden, indem die Vektoren auf den Makroblock, der zu dem Referenz-Makroblock homolog ist, der im vorhergehenden Bild angeordnet ist, projiziert werden,
c) 2 × D Prädiktoren unter Verwendung der P- und Q-Prädiktor-Makroblöcken zugewiesenen Bewegungsvektoren getrennt werden, wobei die P- und Q-Prädiktor-Makroblöcke zu Ganzzahl- und/oder Bruchzahl-Größen summiert werden, die im voraus in Nachschlagtabellen definiert sind, die durch eine ganze Zahl adressiert werden, die dem Teilbild zwischen einer Anzahl C verfügbarer Teilbilder der Norm L1 mit Minimum-P- und -Q-Werten und dem Referenz-Makroblock zugewiesen ist,
d) ein Unterabtastblock sequentiell mit den Prädiktorwerten der P + Q + 2 × D Makroblöcke und mit den Pixelwerten des Referenz-Makroblocks gespeist wird,
e) für jedes Paar von Makroblöcken, die durch einen und nur einen der Prädiktoren P oder Q oder 2 × D und durch den Referenz-Makroblock gebildet sind, diejenige auf L1 bezugnehmende Norm berechnet wird, die die Summe der Absolutwert-Differenzen zwischen den homologen Pixeln, die zu dem Paar Makroblöcke gehören, repräsentiert,
f) der Minimalwert der Normen identifiziert wird und die x- und y-Komponenten für den Bewegungsvektor, der dem Referenz-Makroblock zugewiesen ist, als Differenz zwischen den homologen Koordinaten des ersten Pixels entsprechend einer Rasterabtastung des Referenz-Makroblocks und dem Prädiktor mit minimaler Verzerrung, der den Wert der Norm L 1 minimiert, berechnet werden,
wobei die Gesamtzahl der Operationen verringert wird, indem während einer Bildverarbeitung eine rekursive Prozedur verwendet wird, die auf der Korrelation basiert, die zwischen Bewegungsvektoren vorhanden ist, die Makroblöcken, die dem Referenz-Makroblock benachbart sind, zugewiesen sind, die Bewegungsvektoren, die allen Makroblöcken des Bildes zugewiesen sind, gespeichert werden, diese mit den Bewegungsvektoren, die entsprechenden Makroblöcken eines nachfolgenden Bildes während seiner Verarbeitung und wenn die Bewegungsvektoren nacheinander nach einer Rasterabtastung der Makroblöcke berechnet werden, einzeln überschrieben werden, und die gespeicherten Bewegungsvektoren, die bereits berechnet wurden und den P-Prädiktor-Makroblöcken zugewiesen sind, und die gespeicherten Bewegungsvektoren, die den Q-Makroblöcken zugewiesen sind und die zu den P-Makroblöcken angrenzend an den Referenz-Makroblock nicht homolog sind, während der Verarbeitung des momentanen Bildes verwendet werden, um P + Q Prädiktorwerte zu adressieren, dadurch gekennzeichnet, daß es außerdem die folgenden Operationen umfaßt:
Erzeugen zweier Bewegungsvektoren (V) für jeden Makroblock des momentan verarbeiteten Teilbildes, die in zwei verschiedenen Ausgangsregistern gespeichert werden können, mittels zweier paralleler rekursiver Suchschätzmittel, wobei jedes Schätzmittel über Multiplizierer mit Bewegungsvektoren versorgt wird, die aus einer Anzahl B von Speichern, die (N/R) × (M/S) Bewegungsvektoren enthalten, gelesen werden;
wobei die Bewegungsvektoren, die an die beiden Schätzmittel geliefert werden, mit im voraus berechneten Konstanten (T_dist) multipliziert werden, die in dem Nur-Lese-Speicher enthalten sind und deren Wert von den B Speichern, deren Bewegungsvektoren gelesen werden, von dem I, dem P- oder dem B-Teilbild, das momentan geschätzt wird, sowie davon abhängt, ob die Schätzung in bezug auf ein vorhergehendes oder nachfolgendes Teilbild bezüglich des einen, das momentan geschätzt wird, ausgeführt wird;
wobei die B Speicher periodisch mit den Bewegungsvektorwerten überschrieben werden, die nacheinander für die Makroblöcke berechnet werden, die auf die künftigen Teilbilder bezüglich des geschätzten Teilbildes und entsprechend auf die Freigabeperiode der B Speicher und in Übereinstimmung mit dem Codierungsprozeß, der in a), b), c), d), e) und f) spezifiziert ist, folgen.

2. Verfahren nach Anspruch 1, ferner umfassend die folgenden Schritte:
Identifizieren des Prädiktor-Makroblocks mit minimaler Verzerrung aus allen obenerwähnten P + Q-Prädiktorwerten;
Vergleichen des sogenannten L1-Normwertes, der dem Prädiktor mit minimaler Verzerrung zugewiesen ist, mit mehreren im voraus berechneten T-Schwellenwerten, die aus statistischen Betrachtungen abgeleitet werden, Identifizieren von mehreren, d. h. D, Paaren von Vektoren, wovon jedes aus Vektoren gebildet ist, die Komponenten mit gleichem Absolutwert, jedoch entgegengesetztem Vorzeichen besitzen;
Summieren der Paare von Vektoren zu dem Vektor, der dem Prädiktor mit minimaler Verzerrung zugewiesen ist, Identifizieren einer Anzahl 2 × D von Prädiktoren, die bezüglich der Anzahl der Paare von Vektoren doppelt vorhanden sind, durch Einschließen von Zwischen- oder Unterpixel-Positionen;
Berechnen des L1-Normwertes für jedes Paar von Makroblöcken, die durch einen Prädiktor-Makroblock, der zu der 2 × D-Menge gehört, und durch den Referenz-Makroblock gebildet sind;
Identifizieren des Makroblocks mit minimaler Verzerrung aus allen 2 × D-Makroblöcken;
Berechnen des Bewegungsvektors.

3. Verfahren nach einem der vorhergehenden Ansprüche, dadurch gekennzeichnet, daß der L1-Normwert aus dem Ergebnis berechnet wird, das durch Unterabtasten des Makroblocks entsprechend einem Fünfpunktgitter berechnet wird.

4. Verfahren nach einem der Ansprüche 1 und 2, bei dem der L1-Normwert durch Interpolieren der Pixel des Prädiktors berechnet wird, indem ein neuer Prädiktor an einer Unterpixel-Position in bezug auf die mehreren Positionen, die dem vorhergehenden Bild zugewiesen sind, erzeugt wird.

5. Rekursives Bewegungsschätzmittel zum Erzeugen zweier verschiedener Bewegungsvektoren (V), die in entsprechenden Ausgangsregistern gespeichert werden können, mit:
einem ersten rekursiven Schätzblock (R.M.E coarse), der einen Bewegungsvektor für jeden Makroblock erzeugt, der zu dem momentan geschätzten Teilbild gehört, und die Vektoren in einer Anzahl B von Speichern, die zu einem Speichervektor-Cache (MV CACHE) gehören und nacheinander in jeder B-Teilbildperiode aktiviert werden, speichert;
wobei der Speichervektor-Cache (MV CACHE) einen zweiten rekursiven Schätzblock (R. M. E fine) mit wenigstens zwei Bewegungsvektoren versorgt, die in einem der momentan aktivierten B Speicher enthalten sind, wobei der zweite rekursive Schätzblock (R.M.E. fine) umfaßt:
eine Multipliziererschaltung für die zwei Vektoren, die dem rekursiven Schätzblock (R.M.E.) zugeführt werden, mit zwei entsprechenden Koeffizienten (T_dist1, T_dist2), die aus einem Nur-Lese-Speicher gelesen werden, deren Wert vom Typ des geschätzten Teilbildes, von dem Teilbild, das den Prädiktor enthält, von dem jeweiligen zeitlichen Abstand sowie von der Tatsache abhängt, ob das Prädiktor-Teilbild dem einen, das momentan geschätzt wird, folgt (T_dist1) oder vorhergeht (T_dist2);
ein Paar rekursiver Such-Schätzmittel, wovon das erste an künftigen Prädiktor-Teilbildern arbeitet und das zweite an vergangenen Prädiktor-Teilbildern arbeitet, die mit den jeweiligen Vektoren eingegeben werden, die sich aus der Multiplikation mit den entsprechenden Koeffizienten (T_dist1, T_dist2) ergeben.

## Revendications

1. Procédé d'estimation de mouvement à partir de trames ou d'images homologues, d'images successives pour codeurs vidéo, consistant à diviser chaque image de N lignes et M colonnes destinée à être soumise à l'estimation de mouvement en un ensemble (N/R)^{*}(M/S) de macroblocs de référence, chacun de R lignes et S colonnes de pixels, à définir pour chacun des macroblocs de référence un ensemble de P+Q+2^{*}D macroblocs prédicteurs d'au moins une composante de luminance et de chrominance disposée sur l'image précédente, et dans lequel :
a) P prédicteurs sont identifiés en utilisant des vecteurs de mouvement associés à des macrablocs qui précèdent les macroblocs de référence sur la même image conformément à un balayage par trames, par projection des vecteurs sur le macrobloc homologue au macrobloc de référence et disposé sur l'image précédente,
b) Q prédicteurs sont identifiés en utilisant des vecteurs de mouvement associés à des macrcblocs qui suivent le macrobloc de référence sur l'image précédente conformément à un balayage par trames, par projection des vecteurs sur le macrobloc homologue au macrobloc de référence placé sur l'image précédente,
c) 2^{*}D prédicteurs sont singularisés en utilisant des vecteurs de mouvement associés à P et Q macroblocs prédicteurs additionnés en quantités entières et/ou fractionnaires prédéfinies dans des tables de correspondance adressées par un nombre entier associé au champ parmi un nombre C de champs disponibles de la norme L1 avec des valeurs minimales P et Q et le macrobloc de référence,
d) un bloc de sous-échantillonnage reçoit séquentiellement les valeurs de prédicteurs des P+Q+2^{*}D macroblocs et les valeurs de pixels du macrobloc de référence,
e) pour chaque paire de macroblocs constituée d'un et d'un seul parmi les prédicteurs P ou Q ou 2^{*}D et le macrobloc de référence, la norme à laquelle il est fait référence par L1 est calculée et représente la somme des différences en valeur absolue entre les pixels homologues appartenant à ladite paire de macroblocs,
f) la valeur minimale desdites normes est identifiée et les composantes x et y sont calculées pour le vecteur de mouvement associé au macrobloc de référence comme la différence entre les coordonnées homologues du premier pixel, selon un balayage tramé du macrobloc de référence et du prédicteur avec distorsion minimale qui minimise la valeur de la norme L1,
dans lequel le nombre total d'opérations est réduit en utilisant un processus récursif basé sur la corrélation existant entre les vecteurs de mouvement associés aux macroblocs adjacents au macrobloc de référence pendant un traitement d'image, en stockant les vecteurs de mouvement associés à tous les macroblocs de l'image, en les écrasant un par un par les vecteurs de mouvement associés aux macroblocs correspondants d'une image suivante pendant son traitement et lorsque les vecteurs de mouvement sont calculés successivement à la suite d'un balayage de type par trames des macroblocs et en utilisant les vecteurs de mouvement stockés déjà calculés associés aux P macroblocs de prédicteurs et aux vecteurs de mouvement stockés associés aux Q macroblocs, non homologues aux P macroblocs adjacents au macrobloc de référence pendant le traitement de l'image courante pour adresser P+Q valeurs de prédicteur, caractérisé en ce qu'il comprend également les opérations suivantes :
produire deux vecteurs de mouvement (V) pour chaque macrobloc du champ traité, pouvant être stockés dans deux registres de sortie distincts, par deux estimateurs de recherche parallèle récursifs, chaque estimateur recevant par l'inter-médiaire de multiplieurs des vecteurs de mouvement lus à partir d'un nombre B de mémoires contenant (N/R)^{*}(M/S) vecteurs de mouvement ;
les vecteurs de mouvement fournis aux deux estimateurs étant multipliés par des constantes calculées à l'avance (T_dist) contenues dans une mémoire morte, dont la valeur dépend de celle des B mémoires dans laquelle les vecteurs de mouvement sont lus, du champ I, P ou B estimé, et du fait que l'estimation est effectuée en relation avec un champ précédent ou suivant par rapport à l'estimation actuellement en cours ;
lesdites B mémoires étant périodiquement écrasées par les valeurs des vecteurs de mouvement calculées successivement pour les macroblocs concernant les champs futurs par rapport au champ estimé, d'une façon correspondant à la période d'activation des B mémoires et conformément au processus de codage spécifié en a), b), c), d), e), et f).

2. Procédé selon la revendication 1, comprenant en outre les étapes suivantes :
identifier le macrobloc de prédicteur de distorsion minimale parmi l'ensemble des P+Q valeurs de prédicteurs indiquées ci-dessus ;
comparer la valeur de la norme appelée L1 associée au prédicteur de distorsion minimale à un ensemble de T seuils calculés à l'avance, déterminés par des considérations statistiques, pour identifier un ensemble D de paires de vecteurs, chaque paire étant constituée de vecteurs ayant des composantes de même valeur absolue mais de signe opposé ;
sommer lesdites paires de vecteurs au vecteur associé au prédicteur de distorsion minimale, et identifier un nombre 2^{*}D de prédicteurs, double par rapport au nombre desdites paires de vecteurs, par inclusion de positions intermédiaires ou de sous-pixels ;
calculer la valeur de la norme L1 pour chaque paire de macroblocs constituée d'un macrobloc prédicteur appartenant à l'ensemble 2^{*}D et du macrobloc de référence ;
identifier le macrobloc de distorsion minimale parmi l'ensemble des 2^{*}D macroblocs ;
calculer le vecteur de mouvement.

3. Procédé selon la revendication 1 ou 2, caractérisé en ce que la valeur de la norme L1 est calculée à partir du résultat obtenu par sous-échantillonnage du macrobloc selon une grille de quincux.

4. Procédé selon la revendication 1 ou 2, dans lequel la valeur de la nome L1 est calculée par interpolation des pixels du prédicteur en produisant un nouveau prédicteur dans une position de sous-pixel par rapport à l'ensemble des positions associées à l'image précédente.

5. Estimateur de mouvement récursif pour produire deux vecteurs de mouvement distincts (V) pouvant être stockés dans des registres de sortie respectifs, comprenant :
un premier bloc d'estimation récursive (R.M.E. grossier) produisant un vecteur de mouvement pour chaque macrobloc appartenant au champ en cours d'estimation et mémorisant les vecteurs dans un nombre B de mémoires appartenant à une antémémoire de vecteurs de mémoire (ANTEMEMOIRE MV) et activés successivement à chaque période de B champs ;
l'antémémoire de vecteurs de mémoire (ANTEMEMOIRE MV) fournissant à un deuxième bloc d'estimation récursive (R.M.E. fin) au moins deux vecteurs de mouvement contenus dans l'une des B mémoires en cours d'activation, le deuxième bloc d'estimation récursive (R.M.E. fin) comprenant :
un circuit multiplieur des deux vecteurs fournis audit bloc d'estimation récursive (R.M.E.), respectivement par deux coefficients (T_dist1, T_dist2) lus dans une mémoire morte dont la valeur dépend du type de champ estimé, du champ qui contient le prédicteur, de la distance temporelle respective et du fait que le champ de prédicteur suit (T_dist1) ou précède (T_dist2) celui qui est estimé ;
une paire d'estimateurs de recherche récursive, le premier opérant sur des champs de prédicteurs futures et le deuxième sur des champs de prédicteurs passées, recevant les vecteurs respectifs résultant de la multiplication et les coefficients respectifs (T_dist1, T_dist2).
